# EUROPEAN PATENT SPECIFICATION

(11) **EP 3 519 798 B1**
(45) Date of publication and mention of the grant of the patent: **28.08.2024**
(21) Application number: 17857219.4
(22) Date of filing: 20.09.2017
(51) Int. Cl.: G01N 19/04, B65D 77/20

(54) **PEEL OPEN TEST PROCEDURE, DEVELOPMENT, AND VALIDATION**
VERFAHREN MIT AUFREISSBAREM TEST, ENTWICKLUNG UND VALIDIERUNG
PROCÉDURE DE TEST OUVERT AU PELAGE, DÉVELOPPEMENT ET VALIDATION

(30) Priority: 30.09.2016 US 201662402236 P
(43) Date of publication of application: 07.08.2019
(73) Proprietor: Edwards Lifesciences Corporation, Irvine, CA 92614 (US)
(72) Inventor: MELGAR, Astrid, Lorraine, Irvine CA 92614 (US); PATEL, Vikas, A., Irvine CA 92614 (US); LIBURD, Gregory, G., Irvine CA 92614 (US); RAJPARA, Vipul, P., Irvine CA 92614 (US)
(74) Representative: Eisenführ Speiser
(86) International application number: PCT/US2017/052563
(87) International publication number: WO 2018/063890

(56) References cited:
- CN-A- 102 507 438
- JP-A- 2013 174 479
- JP-A- 2013 174 479
- JP-U- H0 729 449
- US-A- 3 580 065
- US-A1- 2008 202 254
- US-A1- 2012 103 081
- US-A1- 2015 059 488

## Description

### CROSS-REFERENCE TO RELATED APPLICATION

The present application claims priority to U.S. Provisional Patent Application No. 62/402,236, entitled "Peel Open Test Procedure, Development, and Validation," filed September 30, 2016.

### FIELD OF THE INVENTION

This invention relates generally to peel-open test systems and methods, and more particularly, to systems and methods for performing a peel-open test procedure on a packaging system for a terminally sterilized medical device.

### BACKGROUND

In general, the goal of a terminally sterilized medical device packaging system is to allow sterilization, provide physical protection, maintain sterility to the point of use, and allow aseptic presentation. Thus, a packaging system's sterile barrier system is important to ensuring the safety of terminally sterilized medical devices.

As such, medical device packaging systems are subjected to validation testing to help ensure that the packaging systems will maintain sterility of terminally sterilized medical devices until the point of use. The International Organization for Standardization (ISO) defines the standard for terminally sterilized medical device packaging systems in ISO 110607.

Per ISO 11607, a packaging system's sterile barrier system must meet requirements for peel-open testing. Peel-open tests are used to determine a packaging system's seal strength and to identify the mode of specimen failure. ISO 11607 requires that "peel-open characteristics shall be continuous and homogeneous, without delamination or tearing of the material that can affect aseptic opening and presentation."

Various peel-open methods have been developed to comply with the ISO 11607 standard. For example, the "knuckle-roll method" has been used to perform peel-open tests on packaging systems. The knuckle-roll method is a manual operation that involves peeling open the packaging system by rolling the knuckles together while the two substrates of the packaging system are secured between the tester's thumbs and index fingers. Due to the subjective nature of the test, the knuckle-roll method does not yield reliable or consistent results and cannot be qualified, validated, or verified.

"ASTM F88 Standard Test Method for Seal Strength of Flexible Barrier Materials" is the industry standard method for performing peel-strength tests on packaging systems. Other common peel-strength tests include the T-peel, the 90 degree peel, and the 180 degree peel. For the T-peel test, two substrates are placed into the peel test grips such that one substrate sticks up, the other sticks down, and the bonded area sticks out horizontally so that the entire setup forms a "T" shape. For the 90 degree peel test, a rigid substrate lies horizontally and the gripped end of a flexible substrate sticks up to form an "L" shape. For the 180 degree peel test, the bonded area of the two substrates is placed vertically between the peel test grips while the free end of the first substrate is gripped by the bottom and the free end of the second substrate is gripped by the top so that it forms a tight "U" shape.

Unfortunately, existing peel-strength systems require the destruction or alteration of the specimen before it can be secured to the test structure. As a result, current systems cannot perform the peel-strength test across the entire packaging system and are often limited to a 25 mm test strip. Moreover, current systems are unable to test the full array of packaging system formats (e.g., pouches, blisters, form-fill-seal (FFS), and trays).

It should be appreciated that there is a need for a peel-open system and method that can be qualified and validated to provide repeatable and reproducible results with the desired confidence and reliability. The system and method should be compatible with multiple packaging system formats and capture seal strength across the entire length of the packaging system. The present invention fulfills these needs and provides further related advantages.
JP 2013-174479 A describes an openability test device that includes a test body holding member for holding a test body having an opening operation part, an operation part holding member for holding an operation part, a first movable member arranged movably in a first direction to draw the operation part holding member, a second movable member arranged freely movably in a second direction to have the test body holding member mounted, a first movement mechanism for moving the first movable member and outputting rotary power, a second movement mechanism for moving the second movable member by the rotary power outputted from the first movement mechanism, a transmission mechanism for transmitting the rotary power outputted from the first movement mechanism to the second movement mechanism, and a load measuring instrument for measuring a load applying to the operation part holding member.

### BRIEF SUMMARY

The invention is defined in the appended claims. In particular, a system according to the invention is defined in claim 1 and a method according to the invention is defined in claim 12. Further beneficial modifications of the system are defined in claims 2 to 11. Embodiments not covered by the claims are considered illustrative and useful for understanding the concept underlying the claimed invention. A system is provided for performing a peel-open test procedure on a package having a first portion and a removable portion. The system comprises a base, a support movably coupled to the base along at least a first direction, and a gripper movably coupled to the support along a second direction. The base comprises a fixture configured to secure the first portion of the package from movement. The gripper is configured to secure the removable portion of the package.

When the first portion of the package is secured by the fixture and the removable portion of the package is secured by the gripper, movement of the support along the first direction and movement of the gripper along the second direction at least partially removes the removable portion of the package from the first portion of the package. In one embodiment, the first direction can be substantially horizontal and the second direction can be substantially vertical.

In one embodiment, the fixture can secure the first portion of the package non-invasively. In another embodiment, the fixture comprises one or a combination of a vacuum hold and a clamp. In a further embodiment, the fixture can comprise a vacuum hold. In an additional embodiment, the vacuum hold can comprise a plurality of apertures in air communication with a vacuum pump. In yet another embodiment, the fixture can comprise a central recess shaped to correspond to a shape of the first portion of the package.

In one embodiment, the package can be selected from the group consisting of: a thermoform tray, a form-fill-seal, a tubular package, and a pouch. In another embodiment, the removable portion of the package can be coupled to the first portion of the package.

In one embodiment, the gripper can comprise blades coupled to the gripper. In another embodiment, the blades can be removably coupled to the gripper. In an additional embodiment, the system can further comprise a load cell coupled to the gripper and configured to measure a seal strength of the package.

A method is provided for performing a peel-open test procedure on a package. The method comprises securing a first portion of the package to a base. The method further comprises securing a removable portion of the package to a gripper, wherein the gripper is movable in a first direction and a second direction. In an additional embodiment, the method can further comprise moving the gripper in the first direction at a substantially constant first speed and in the second direction at a substantially constant second speed to remove at least a portion of the removable portion of the package from the first portion at a substantially constant peel angle.

In one embodiment, the step of securing the first portion of the package to the base can comprise placing the first portion of the package onto a vacuum hold coupled to the base. In an additional embodiment, the step of securing the first portion of the package to the base can maintain the first portion of the package on the base throughout a range of forces required to remove the removable portion of the package.

In one embodiment, the step of securing the removable portion of the package to the gripper can comprise manually peeling a portion of the removable portion of the package from the first portion of the package and securing the peeled portion within the gripper.

In one embodiment, one or both of the first and second speeds can be from about 1 cm/min to about 100 cm/min. In a another embodiment, the peel angle can be from about 1° to about 89°.

In one embodiment, the method can further comprise the step of measuring the seal strength of the package. In another embodiment, the method can further comprise the step of visually inspecting the package to identify defects following the moving, wherein the defects are selected from the group consisting of: delaminations, channels, voids, narrow seals, film tears, and fiber tears.

Other features and advantages of the invention should become apparent from the following description of the preferred embodiments, taken in conjunction with the accompanying drawings, which illustrate, by way of example, the principles of the invention.

### BRIEF DESCRIPTION OF THE DRAWINGS

Figure 1 is a front-side perspective view of a system for performing peel-open tests on a packaging system, in accordance with one embodiment.
Figure 2 is a back-side perspective view of a system for performing peel-open tests on a packaging system, in accordance with one embodiment.
Figure 3 is a side elevational view of a system for performing peel-open tests on a packaging system, in accordance with one embodiment.
Figures 4A-4D are front-side perspective detail views of a system for performing peel-open tests on a packaging system, in accordance with one embodiment.
Figures 5A-5C are side elevational detail views of a system for performing peel-open tests on a packaging system, in accordance with one embodiment.
Figure 6 is a side elevational detail view of a system for performing peel-open tests on a packaging system, in accordance with one alternative.
Figures 7A and 7B are front-side perspective views of a fixture for securing a packaging system, in accordance with one embodiment.
Figure 8 is a front-side perspective view of a fixture for securing a packaging system, in accordance with one embodiment.
Figure 9 is a rear-side perspective view of a fixture for securing a packaging system, in accordance with one embodiment.
Figure 10 is a front-side perspective view of a fixture for securing a packaging system, in accordance with one embodiment.
Figure 11 is a front-side perspective view of a fixture for securing a packaging system, in accordance with one embodiment.

### DETAILED DESCRIPTION OF THE PREFERRED EMBODIMENTS

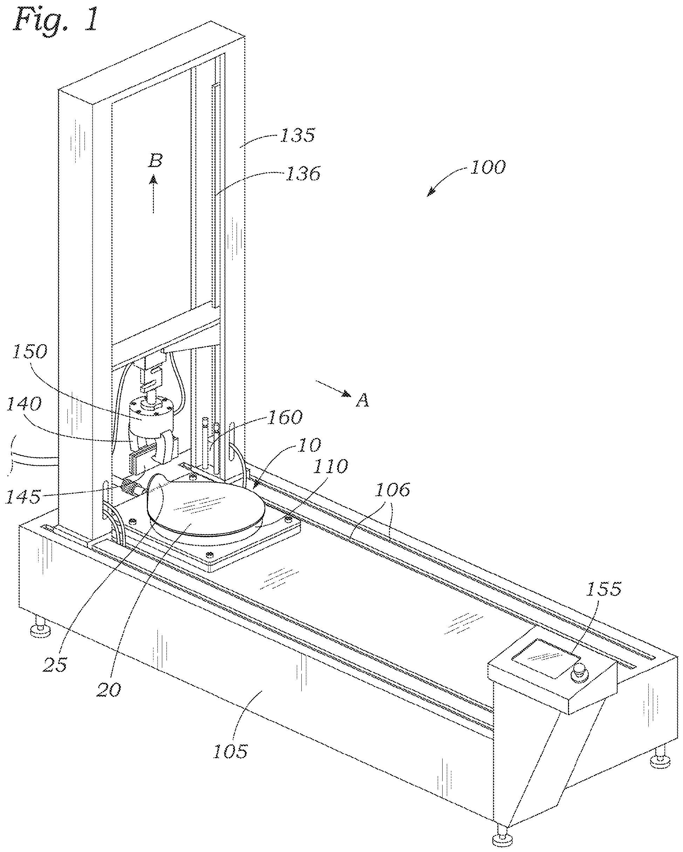

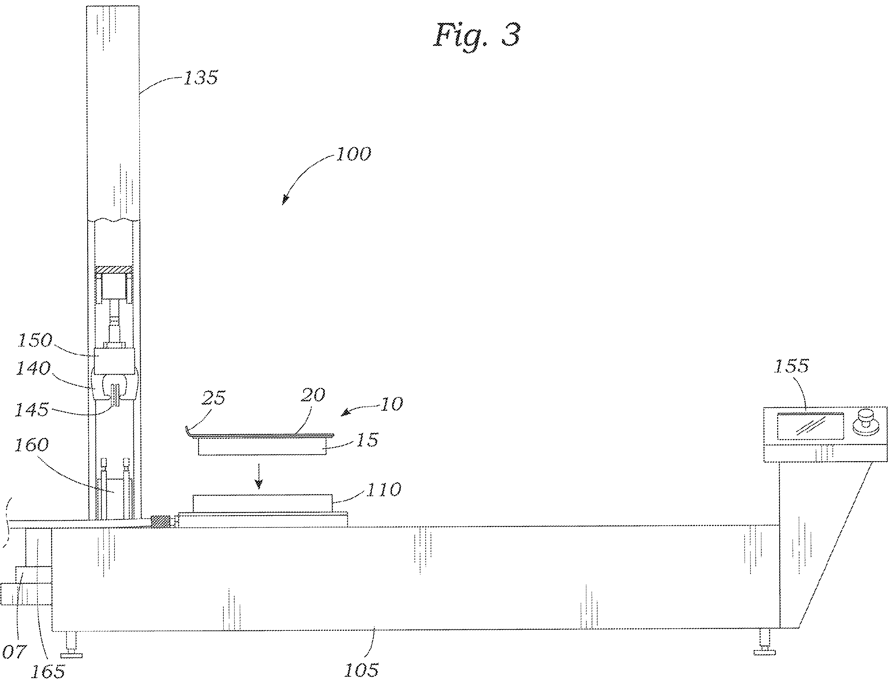

With reference now to Figures 1-3 of the illustrative drawings, there is shown a peel-open test system 100 for performing a peel-open test procedure on a package 10 having a first portion 15 coupled to a removable portion 20 in accordance with one embodiment. The system 100 comprises a base 105 having a fixture 110, a support 135 movably coupled to the base 105 along a first direction A, and a gripper 140 movably coupled to the support 135 along a second direction B. In one embodiment, the first direction A can be along a substantially horizontal axis and the second direction B can be along a substantially vertical axis. In another embodiment, the first and second directions A and B are substantially perpendicular to one another.

The gripper 140 is configured to secure a portion 25 of the removable portion 20 of the package 10. For example, in one embodiment, the gripper 140 can comprise blades 145 coupled to the gripper 140. The blades 145 can be removably coupled to the gripper 140.

In one embodiment, the system 100 can further comprise a first motor 160 and a first track 136. In another embodiment, the gripper 140 can engage the first track 136 so that the gripper 140 is movably coupled to the support 135. The first motor 160 can cause the gripper 140 to move along the support 135 in the second direction B. For example, in one embodiment, the gripper 140 can move along the support 135 along a vertical axis.

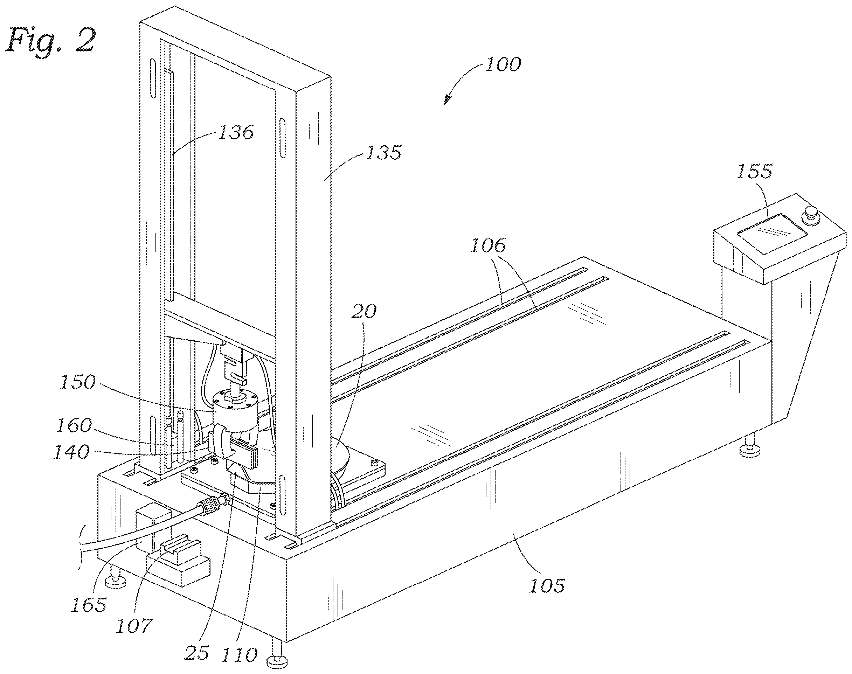

With particular reference to Figure 2, in one embodiment, the system 100 can further comprise a second motor 165. In another embodiment, the base 105 can comprise a second track 107. In a further embodiment, the base 105 can comprise a plurality of parallel slots 106. In an additional embodiment, the support 135 can comprise two parallel columns, which are substantially orthogonal to a length of the base 105. In yet another embodiment, the base 105 can comprise a combination of these elements and more.

For example, in one embodiment, the support 135 can engage the second track 107 so that the support 135 is movably coupled to the base 105. In another embodiment, the support 135 can extend through the parallel slots 106 to engage the second track 107 within the base 105. In a further embodiment, the second motor 165 can cause the support 135 to move along the plurality of parallel slots 106 on the base 105 in the first direction A. In an additional embodiment, the support 135 moves along the base 105 along a horizontal axis.

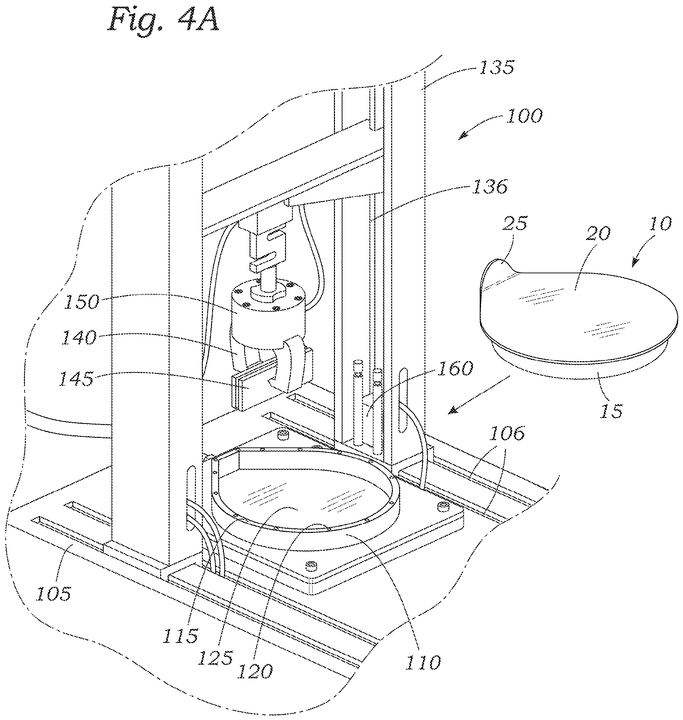

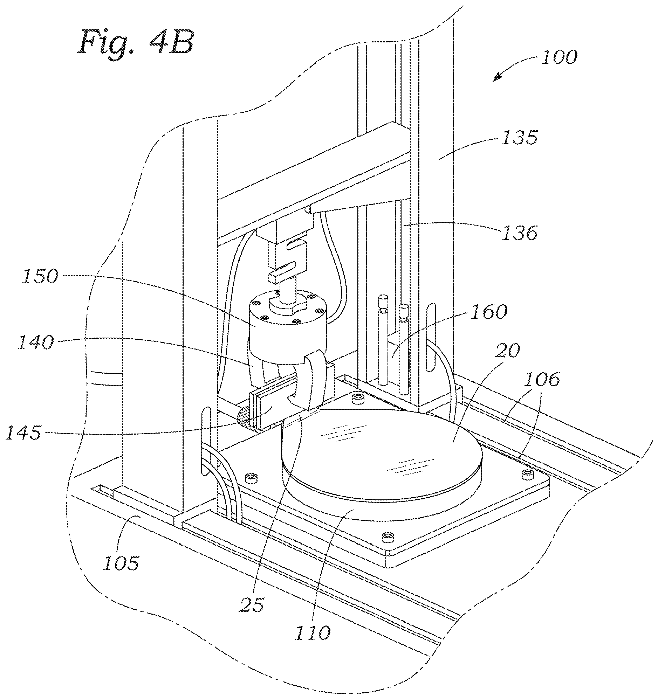

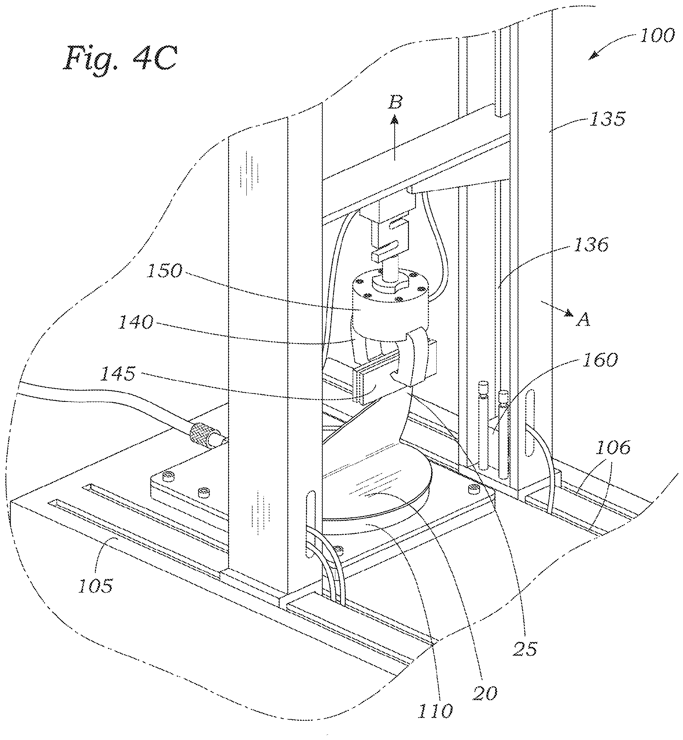

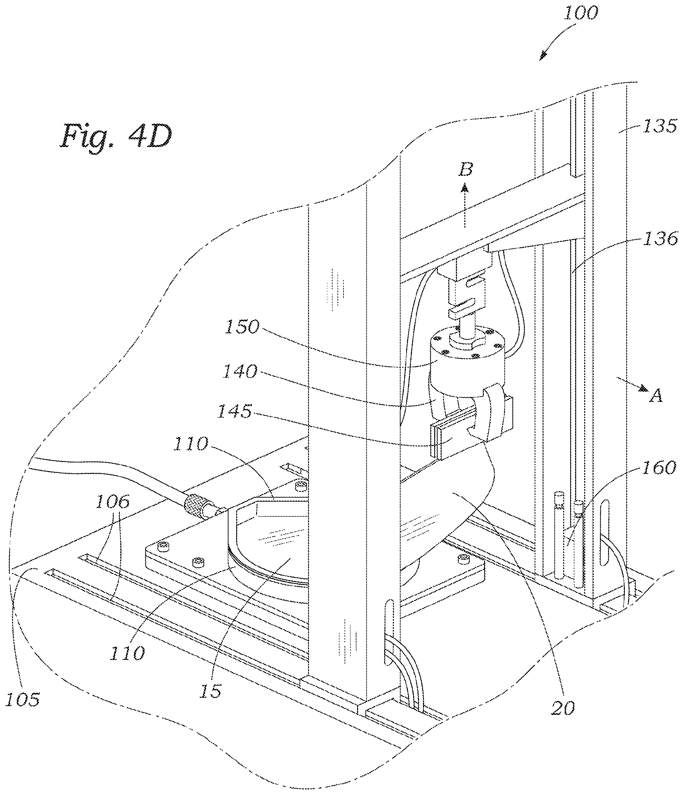

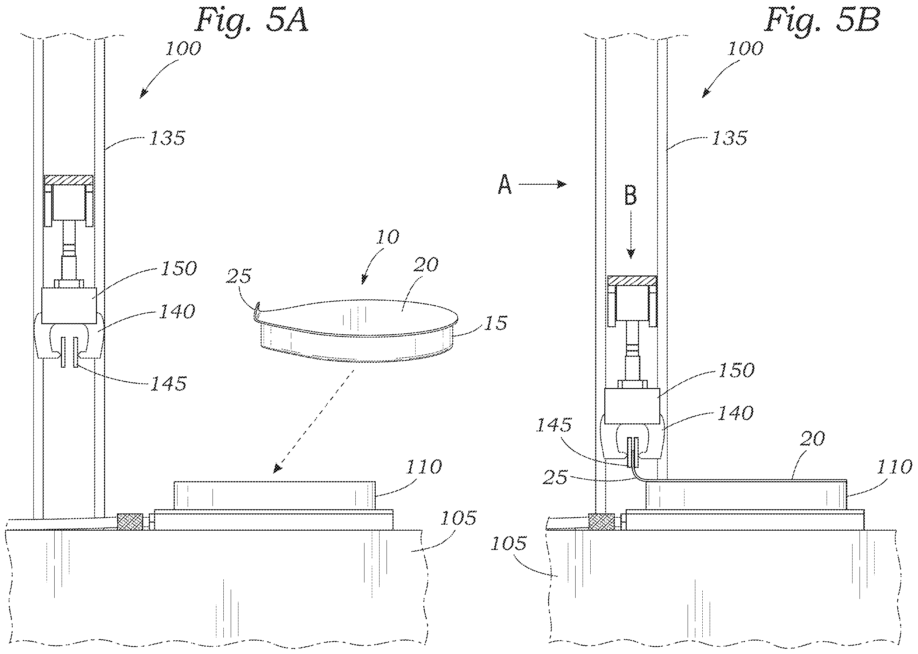

With reference now to Figures 4A-4D and 5A-5C, the fixture 110 is configured to secure the first portion 15 of the package 10 from movement. In a further embodiment, when the first portion 15 of the package 10 is secured by the fixture 110 and the removable portion 20 of the package 10 is secured by the gripper 140, movement of the support 135 along the first direction A and movement of the gripper 140 along the second direction B at least partially removes the removable portion 20 of the package 10 from the first portion 15 of the package 10.

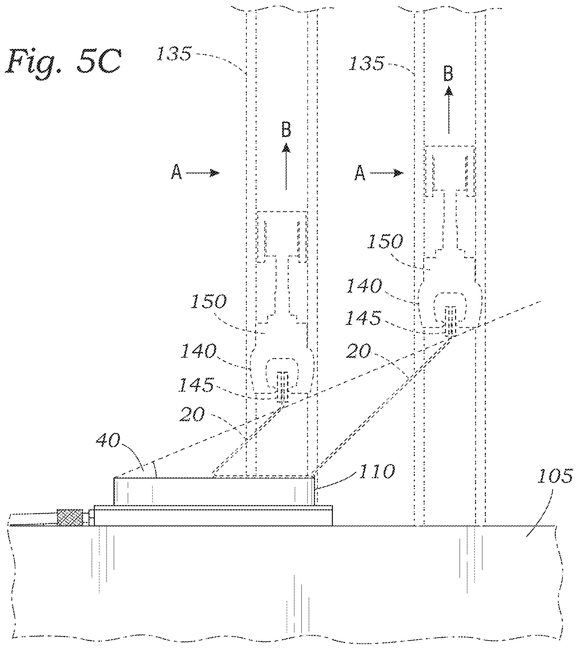

With particular reference to Figure 5C, in at least one embodiment, the support 135 moves along the base 105 in the first direction A and the gripper 140 moves along the support 135 in the second direction B. In another embodiment, the support 135 moves in the first direction A at a substantially constant first speed and the gripper 140 moves in the second direction B at a substantially constant second speed. It should be understood that, so configured, the gripper 140 can move at a substantially constant angle 40 relative to the base 105 and at a substantially constant speed.

In one embodiment, one or both of the first and second speeds can be from about 1 cm/min to about 100 cm/min. In another embodiment, one or both of the first and second speeds can be about 1 cm/min, about 5 cm/min, about 10 cm/min, about 15 cm/min, about 20 cm/min, about 25 cm/min, about 30 cm/min, about 35 cm/min, about 40 cm/min, about 45 cm/min, about 50 cm/min, about 55 cm/min, about 60 cm/min, about 65 cm/min, about 70 cm/min, about 75 cm/min, about 80 cm/min, about 85 cm/min, about 90 cm/min, about 95 cm/min, or about 100 cm/min. In a further embodiment, one or both of the first and second speeds ban be in a range between any two of the proceeding values.

In at least one embodiment, the movement of the support 135 along the first direction A and movement of the gripper 140 along the second direction B can at least partially remove the removable portion 20 of the package 10 from the first portion 15 of the package 10 at a substantially constant peel angle 40 and at a substantially constant speed. It should be understood that, if the peel angle 40 and speed remain substantially constant, the force applied to the package 10 will also be constant. Therefore, in another embodiment, the movement of the support 135 along the first direction A and movement of the gripper 140 along the second direction B can at least partially remove the removable portion 20 of the package 10 from the first portion 15 of the package 10 at a substantially constant force.

In one embodiment, the force applied to the package 10 can be measured. Thus, with continued reference to Figures 4A-4D and 5A-5C, the system 100 can further comprise a load cell 150 coupled to the gripper 140. In a further embodiment, the load cell 150 can be configured to measure a seal strength of the package 10. Seal strength is a measure of the strength of a packaging system's sterile barrier system (or seal). It is a qualitative measure for use in process validation, process control, and capability. In one embodiment, the load cell 150 can be configured to measure the resistance force as the removable portion 20 is separated from the first portion 20 to calculate the seal strength of the package 10. In another embodiment, the load cell 150 can be configured to measure the force required to separate the removable portion 15 of the package 10 from the first portion 15 of the package 10 to calculate the seal strength of the package 10.

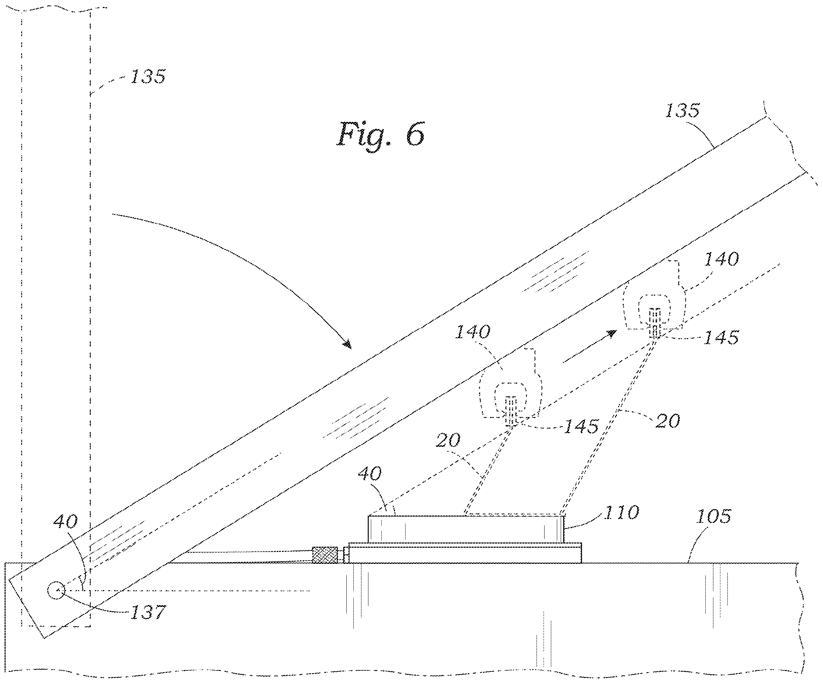

With reference now to Figure 6, in an alternative not covered by the present claims, a system 100 is provided for performing a peel-open test procedure on a package 10 having a first portion 15 and a removable portion 20. The system 100 can comprise a base 105 having a fixture 110, a support 135 pivotably coupled to the base 105, and a gripper 140 movably coupled to the support 135 along a direction A. The fixture 110 can be configured to secure the first portion 15 of the package 10 from movement and the gripper 140 can be configured to secure the removable portion 20 of the package 10.

In one embodiment of the alternative, the support 135 can be pivotable to a desired angle relative to the base 105. In another embodiment, the desired angle can be from about 1° to about 89°. In a further embodiment, the desired angle can about 1°, about 5°, about 10°, about 15°, about 20°, about 25°, about 30°, about 35°, about 40°, about 45°, about 50°, about 55°, about 60°, about 65°, about 70°, about 75°, about 80°, about 85°, or about 89°. In a further embodiment, the desired angle can be in a range between any two of the proceeding values. In a further embodiment, once the support 135 is pivoted to the desired angle, the support 135 can be maintained at that angle for the duration of the testing procedure.

In one embodiment of the alternative, the gripper 140 is movably coupled to the support 135 and configured to move along the support, which is at the desired angle relative to the base 105, in a first direction A. In an additional embodiment, when the first portion 15 of the package 10 is secured by the fixture 110 and the removable portion 20 of the package 10 is secured by the gripper 140, movement of the gripper 140 along the support 135 in the direction A can at least partially remove the removable portion 20 of the package 10 from the first portion 15 of the package 10 at a substantially constant peel angle 40.

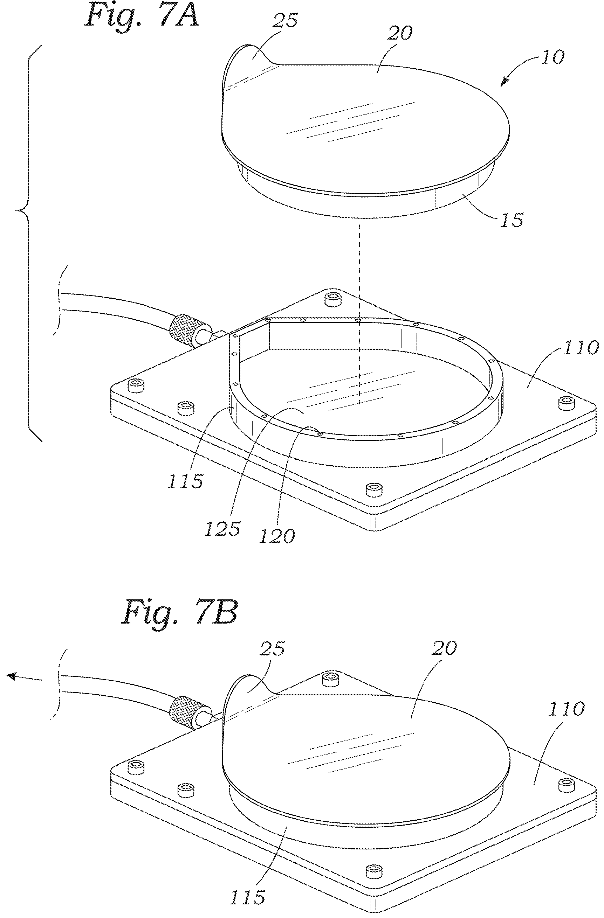

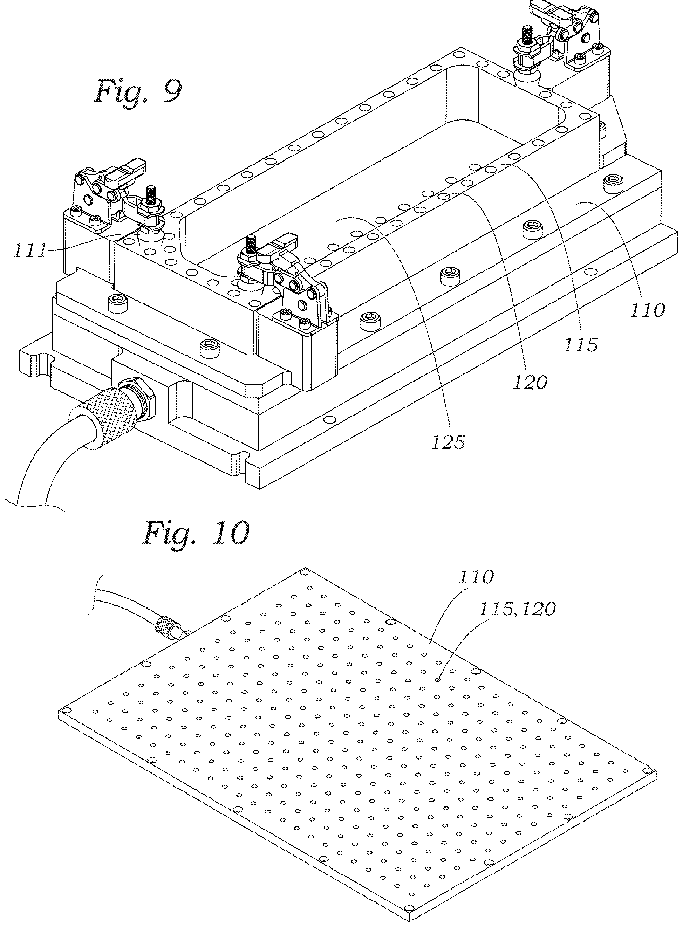

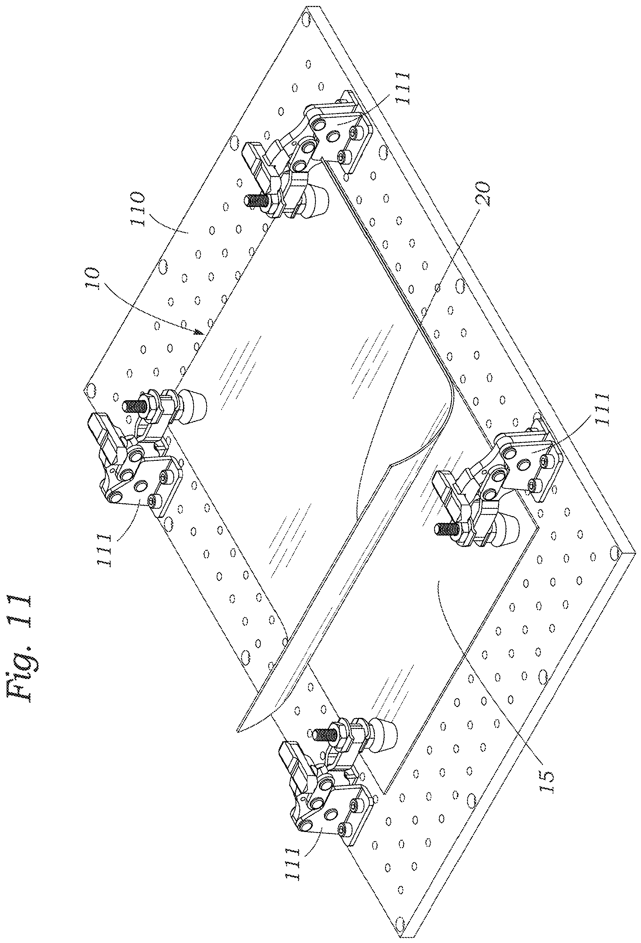

With reference now to Figures 7A, 7B, and 8-11, in one embodiment, the fixture 110 can secure the first portion 15 of the package 10 non-invasively. The first portion 15 of the package 10 is secured to the fixture 110 non-invasively if it is secured without the introduction of instruments or other objects into the package 10. For example, in another embodiment, the fixture 110 can comprise a vacuum hold 115 (Figures 7A, 7B, and 8-10), at least one toggle clamp 111 (Figures 9 and 11), an adhesive, or some combination of these means of non-invasively securing the first portion 15 of the package 10 to the fixture 110.

In one embodiment, the vacuum hold 115 can comprise a plurality of apertures 120 in air communication with a vacuum pump (not shown). In another embodiment, the vacuum hold 115 can create a vacuum force on the first portion 15 of the package 10 that is sufficient to secure the first portion 15 of the package 10 from substantial movement or displacement as the gripper 140 pulls on the removable portion 20 with sufficient force to separate the removable portion 20 from the first portion 15.

A vacuum hold 115 may not be desirable for some packaging formats. For example, it might be preferable to use a mechanical securing means to non-invasively secure a package 10 having an extremely porous first portion 15. Accordingly, with particular reference to Figures 9 and 11, in a further embodiment, the fixture 100 can comprise at least one toggle clamp 111 to secure the first portion 20 of the package 10 to the fixture 110. It should be appreciated that the toggle clamp 111 can be used by itself (as shown in Figure 11) or in combination with another retaining means, such as a vacuum hold 115 (Figure 9) or an adhesive.

As will be understood by a person of ordinary skill in the art, many packaging formats are suitable for creating a sterile barrier in a medical device packaging system. For example, the package 10 can comprise thermoform trays, form-fill-seal packages, pouches (including chevron, corner-peel, and header pouches), bags, and blisters. In one embodiment, the package 10 can be selected from the group consisting of a thermoform tray, a form-fill-seal, a tubular package, and a pouch. Thus, the package 10 can have different formats, shapes, or configurations.

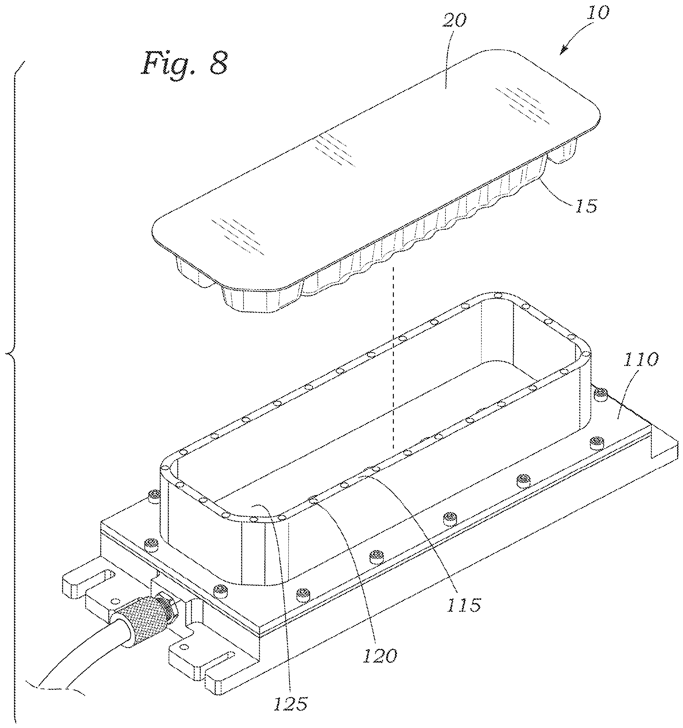

With continued reference to Figures 7A, 7B, and 8-11, in one embodiment, the fixture 110 can comprise a central recess 125 shaped to correspond to at least a portion of a shape of the first portion 20 of the package 10. For example, Figures 7A and 7B depict a recess 125 shaped to correspond to a first portion 20 that is somewhat round, while Figure 8 depicts a recess 125 shaped to correspond to a first portion 20 having a rectangular shape. With particular reference to Figures 10 and 11, in another embodiment, the fixture 110 can comprise a substantially flat vacuum plate. The vacuum plate can be used, for example, to secure packages 10 that are substantially flat, such as bags or pouches. In a further embodiment, one or more toggle clamps 111 can be used with any of the fixtures 110 described above. For example, with reference to Figure 9, toggle clamps 111 can be used with fixtures 110 comprising a central recess 125. Alternatively, toggle clamps 111 can be used with flat fixtures 110, as shown in Figure 11.

The system 100 can be configured to test a variety of packaging formats across a wide range of sizes. For example, in one embodiment, the system 100 can be configured to test packaging systems having a length up to about 155 cm and a width up to about 55 cm. Moreover, the system 100 can remove substantially all of the removable portion 20 from the first portion 15 so as to capture seal strength results for the entire packaging system. Thus, it should be understood that the system 100 overcomes the existing limitations of the ASTM F88 standard and provides a measurement of the total package seal strength.

With reference again to Figures 4A-4D and 5A-5C, a method is provided for performing a peel-open test procedure on a package 10. The method comprises securing a first portion 15 of the package 10 to a base 105. The step of securing the first portion 15 of the package 1 to the base 105 comprises selecting a fixture 110 having a central recess 125 shaped to correspond to a shape of the first portion 20 of the package 10, coupling the fixture 110 to the base 105, and placing the first portion 15 of the package 10 within the central recess 125 of the fixture 110. In another embodiment, the fixture 110 further comprises a vacuum hold 15 and the step of securing the first portion 15 of the package 10 to the base 105 can comprise placing the first portion 15 of the package 10 on the vacuum hold 115 and activating the vacuum hold 115. The vacuum hold 115 can comprise a plurality of apertures 120 in air communication with a vacuum pump (not shown). In a further embodiment, the step of securing the first portion 15 of the package 10 to the base 105 can maintain the first portion 15 of the package 10 on the base 110 throughout a range of forces required to remove the removable portion 20 of the package 10.

The method further comprises securing a removable portion 20 of the package 10 to a gripper 140. In one embodiment, the step of securing the removable portion 20 of the package 10 to the gripper 140 can comprise manually peeling a portion 25 of the removable portion 20 of the package 10 from the first portion 15 of the package 10 and securing the peeled portion 25 within the gripper 140.

In one embodiment, the gripper 140 is movable in a first direction A and a second direction B, and the method can further comprise moving the gripper 140 in the first direction A at a substantially constant first speed and in the second direction B at a substantially constant second speed to remove at least a portion of the removable portion 20 of the package 10 from the first portion 15 at a substantially constant peel angle 40.

In one embodiment, one or both of the first and second speeds can be from about 1 cm/min to about 100 cm/min. In another embodiment, one or both of the first and second speeds can be about 1 cm/min, about 5 cm/min, about 10 cm/min, about 15 cm/min, about 20 cm/min, about 25 cm/min, about 30 cm/min, about 35 cm/min, about 40 cm/min, about 45 cm/min, about 50 cm/min, about 55 cm/min, about 60 cm/min, about 65 cm/min, about 70 cm/min, about 75 cm/min, about 80 cm/min, about 85 cm/min, about 90 cm/min, about 95 cm/min, or about 100 cm/min. In a further embodiment, one or both of the first and second speeds ban be in a range between any two of the proceeding values.

In a further embodiment, the peel angle 40 can be from about 1° to about 89°. In an additional embodiment, the peel angle 40 can be about 1°, about 5°, about 10°, about 15°, about 20°, about 25°, about 30°, about 35°, about 40°, about 45°, about 50°, about 55°, about 60°, about 65°, about 70°, about 75°, about 80°, about 85°, or about 89°. In another embodiment, the peel angle 40 can be in a range between any two of the proceeding values.

In one embodiment, the method can further comprise the step of measuring the seal strength of the package 10. For example, another embodiment, the gripper 140 further comprises a load cell 150, which can be configured to measure the seal strength of the package 10. In a further embodiment, the step of measuring the seal strength of the package 10 can comprise measuring the resistance force as the removable portion 20 is separated from the first portion 15. In an additional embodiment, the load cell 150 can be configured to measure the force required to separate the removable portion 20 of the package 10 from the first portion 15 of the package 10 to calculate the seal strength of the package 10.

In one embodiment, the method can further comprise the step of visually inspecting the package 10 to identify defects following the moving, wherein the defects are selected from the group consisting of: delaminations, channels, voids, narrow seals, film tears, and fiber tears. These defects are well understood in the art and are further described in U.S. Provisional Patent Application No. 62/402,236.

It should be appreciated from the foregoing description that the present invention provides peel-open systems and methods that are compatible with multiple packaging system formats and provide seal strength results across the entire packaging system. The peel-open systems and methods can be qualified and validated to provide repeatable and reproducible seal strength results with the desired confidence and reliability.

Specific methods, devices, and materials are described, although any methods and materials similar or equivalent to those described can be used in the practice or testing of the present embodiment. Unless defined otherwise, all technical and scientific terms used herein have the same meanings as commonly understood by one of ordinary skill in the art to which this embodiment belongs. As used herein, singular words such as "a" and "an" mean "one or more" unless clear intent is shown to limit the element to "one." The term "about" means ±2% of the value it modifies.

Without further elaboration, it is believed that one skilled in the art, using the proceeding description, can make and use the present invention to the fullest extent. The invention has been described in detail with reference only to the presently preferred embodiments. Accordingly, the invention is defined only by the following claims.

## Claims

1. A system (100) for performing a peel-open test procedure on a package (10) having a first portion (15) and a removable portion (20), the system (100) comprising:
a base (105) comprising a fixture (110) configured to secure the first portion (15) of the package (10) from movement;
a support (135) movably coupled to the base (105) along at least a first direction (A); and
a gripper (140) movable along the support (135) along a second direction (B), the gripper (140) configured to secure the removable portion (20) of the package (10); and
wherein, when the first portion (15) of the package (10) is secured by the fixture (110) and the removable portion (20) of the package (10) is secured by the gripper (140), movement of the support (135) along the first direction (A) and movement of the gripper (140) along the second direction (B) at least partially removes the removable portion (20) of the package (10) from the first portion (15) of the package (10).

2. The system (100) of claim 1, wherein the fixture secures the first portion (15) of the package (10) non-invasively.

3. The system (100) of any one of the preceding claims, wherein the fixture (110) comprises one or a combination of a vacuum hold (115) and a clamp (111).

4. The system (100) of claim 3, wherein the vacuum hold (115) comprises a plurality of apertures (120) in air communication with a vacuum pump.

5. The system (100) of any one of the preceding claims, wherein the gripper (140) comprises blades (145) coupled to the gripper (140).

6. The system (100) of any one of the preceding claims, further comprising a load cell (150) coupled to the gripper (140) and configured to measure a seal strength of the package (10).

7. The system (100) of any one of the preceding claims, wherein the first direction (A) is substantially horizontal and the second direction (B) is substantially vertical.

8. The system (100) of any one of the preceding claims, wherein the support (135) is configured to move along the base (105) in the first direction (A) at a substantially constant first speed and the gripper (140) is configured to move along the support (135) in the second direction (B) at a substantially constant second speed.

9. The system (100) of any one of the preceding claims, wherein the movement of the support (135) along the first direction (A) and the movement of the gripper (140) along the second direction (B) at least partially removes the removable portion (20) of the package (10) from the first portion (15) of the package (10) at a substantially constant force.

10. The system (100) of claim 8, wherein the gripper (140) is configured to move along the second direction (B) at a substantially constant angle relative to the base (105) and at a substantially constant speed.

11. The system (100) of any one of claims 8 to 10, wherein movement of the gripper (140) along the second direction (B) at least partially removes the removable portion (20) of the package (10) from the first portion (15) at a substantially constant peel angle.

12. A method for performing a peel-open test procedure on a package (10) having a first portion (15) and a removable portion (20), the method comprising:
securing the first portion (15) of the package (10) from movement on a base (105) using a fixture (110) configured to secure the first portion (15);
movably coupling a support (135) to the base (105) along at least a first direction (A); and
providing a gripper (140) movably along the support (135) along a second direction (B), the gripper (140) configured to secure the removable portion (20) of the package (10), such that the first portion (15) of the package (10) is secured by the fixture (110) and the removable portion (20) of the package (10) is secured by the gripper (140);
moving the support (135) along the first direction (A) and moving the gripper (140) along the second direction (B) to at least partially remove the removable portion (20) of the package (10) from the first portion (15) of the package (10).

## Patentansprüche

1. System (100) zum Durchführen eines Testvorgangs mit Aufreißtest an einer Verpackung (10) mit einem ersten Anteil (15) und einem entfernbaren Anteil (20), wobei das System (100) umfasst:
eine Basis (105), umfassend eine Halterung (110), die ausgestaltet ist, um den ersten Anteil (15) der Verpackung (10) so zu befestigen, dass er sich nicht bewegt;
einen Träger (135), der entlang mindestens einer ersten Richtung (A) beweglich an die Basis (105) gekoppelt ist; und
einen Greifer (140), der entlang des Trägers (135) entlang einer zweiten Richtung (B) beweglich ist, wobei der Greifer (140) ausgestaltet ist, um den entfernbaren Anteil (20) der Verpackung (10) zu befestigen; und
wobei, wenn der erste Anteil (15) der Verpackung (10) an der Halterung (110) befestigt ist und der entfernbare Anteil (20) der Verpackung (10) an dem Greifer (140) befestigt ist, Bewegung des Trägers (135) entlang der ersten Richtung (A) und Bewegung des Greifers (140) entlang der zweiten Richtung (B) den entfernbaren Anteil (20) der Verpackung (10) mindestens teilweise von dem ersten Anteil (15) der Verpackung (10) entfernt.

2. System (100) nach Anspruch 1, wobei die Halterung den ersten Anteil (15) der Verpackung (10) nicht-invasiv befestigt.

3. System (100) nach einem der vorhergehenden Ansprüche, wobei die Halterung (110) eines von oder eine Kombination von einem Vakuumhalter (115) und einer Klemme (111) umfasst.

4. System (100) nach Anspruch 3, wobei der Vakuumhalter (115) eine Vielzahl von Öffnungen (120) in Luftkommunikation mit einer Vakuumpumpe umfasst.

5. System (100) nach einem der vorhergehenden Ansprüche, wobei der Greifer (140) Klingen (145) umfasst, die an den Greifer (140) gekoppelt sind.

6. System (100) nach einem der vorhergehenden Ansprüche, des Weiteren umfassend eine Lastzelle (150), die an den Greifer (140) gekoppelt ist und ausgestaltet ist, um eine Siegelfestigkeit der Verpackung (10) zu messen.

7. System (100) nach einem der vorhergehenden Ansprüche, wobei die erste Richtung (A) im Wesentlichen horizontal ist, und die zweite Richtung (B) im Wesentlichen vertikal ist.

8. System (100) nach einem der vorhergehenden Ansprüche, wobei der Träger (135) ausgestaltet ist, um sich entlang der Basis (105) in die erste Richtung (A) mit einer im Wesentlichen konstanten ersten Geschwindigkeit zu bewegen, und der Greifer (140) ausgestaltet ist, um sich entlang des Trägers (135) in die zweite Richtung (B) mit einer im Wesentlichen konstanten zweiten Geschwindigkeit zu bewegen.

9. System (100) nach einem der vorhergehenden Ansprüche, wobei die Bewegung des Trägers (135) entlang der ersten Richtung (A) und die Bewegung des Greifers (140) entlang der zweiten Richtung (B) den entfernbaren Anteil (20) der Verpackung (10) mit einer im Wesentlichen konstanten Kraft mindestens teilweise von dem ersten Anteil (15) der Verpackung (10) entfernt.

10. System (100) nach Anspruch 8, wobei der Greifer (140) ausgestaltet ist, um sich in einem im Wesentlichen konstanten Winkel relativ zu der Basis (105) und mit einer im Wesentlichen konstanten Geschwindigkeit entlang der zweiten Richtung (B) zu bewegen.

11. System (100) nach einem der Ansprüche 8 bis 10, wobei Bewegung des Greifers (140) entlang der zweiten Richtung (B) den entfernbaren Anteil (20) der Verpackung (10) mit einem im Wesentlichen konstanten Schälwinkel mindestens teilweise von dem ersten Anteil (15) entfernt.

12. Verfahren zum Durchführen eines Testvorgangs mit Aufreißtest an einer Verpackung (10) mit einem ersten Anteil (15) und einem entfernbaren Anteil (20), wobei das Verfahren umfasst:
Befestigen des ersten Anteils (15) der Verpackung (10) an einer Basis (105), so dass er sich nicht bewegen kann, unter Verwendung einer Halterung (110), die ausgestaltet ist, um den ersten Anteil (15) zu befestigen;
bewegliches Koppeln eines Trägers (135) an die Basis (105) entlang mindestens einer ersten Richtung (A); und
Bereitstellen eines Greifers (140), der entlang des Trägers (135) entlang einer zweiten Richtung (B) beweglich ist, wobei der Greifer (140) ausgestaltet ist, um den entfernbaren Anteil (20) der Verpackung (10) so zu befestigen, dass der erste Anteil (15) der Verpackung (10) an der Halterung (110) befestigt ist und der entfernbare Anteil (20) der Verpackung (10) an dem Greifer (140) befestigt ist;
Bewegen des Trägers (135) entlang der ersten Richtung (A) und Bewegen des Greifers (140) entlang der zweiten Richtung (B), um den entfernbaren Anteil (20) der Verpackung (10) mindestens teilweise von dem ersten Anteil (15) der Verpackung (10) zu entfernen.

## Revendications

1. Système (100) destiné à effectuer une procédure de test d'ouverture par pelage sur un emballage (10) présentant une première partie (15) et une partie amovible (20), le système (100) comprenant :
une base (105) comprenant un accessoire (110) conçu pour fixer la première partie (15) de l'emballage (10) contre un déplacement ;
un support (135) accouplé de façon mobile à la base (105) le long d'au moins un premier sens (A) ; et
un dispositif de préhension (140) mobile le long du support (135) le long d'un second sens (B), le dispositif de préhension (140) étant conçu pour fixer la partie amovible (20) de l'emballage (10) ; et
dans lequel, lorsque la première partie (15) de l'emballage (10) est fixée par l'accessoire (110) et que la partie amovible (20) de l'emballage (10) est fixée par le dispositif de préhension (140), le déplacement du support (135) le long du premier sens (A) et le déplacement du dispositif de préhension (140) le long du second sens (B) enlèvent au moins partiellement la partie amovible (20) de l'emballage (10) à partir de la première partie (15) de l'emballage (10).

2. Système (100) selon la revendication 1, l'accessoire fixant la première partie (15) de l'emballage (10) de manière non invasive.

3. Système (100) selon l'une quelconque des revendications précédentes, l'accessoire (110) comprenant un élément parmi un maintien sous vide (115) et une pince (111) ou une combinaison de ceux-ci.

4. Système (100) selon la revendication 3, le maintien sous vide (115) comprenant une pluralité d'ouvertures (120) en communication d'air avec une pompe à vide.

5. Système (100) selon l'une quelconque des revendications précédentes, le dispositif de préhension (140) comprenant des lames (145) accouplées au dispositif de préhension (140).

6. Système (100) selon l'une quelconque des revendications précédentes, comprenant en outre une cellule de charge (150) accouplée au dispositif de préhension (140) et conçue pour mesurer une force d'étanchéité de l'emballage (10).

7. Système (100) selon l'une quelconque des revendications précédentes, le premier sens (A) étant sensiblement horizontal et le second sens (B) étant sensiblement vertical.

8. Système (100) selon l'une quelconque des revendications précédentes, le support (135) étant conçu pour se déplacer le long de la base (105) dans le premier sens (A) à une première vitesse sensiblement constante et le dispositif de préhension (140) étant conçu pour se déplacer le long du support (135) dans le second sens (B) à une seconde vitesse sensiblement constante.

9. Système (100) selon l'une quelconque des revendications précédentes, le déplacement du support (135) le long du premier sens (A) et le déplacement du dispositif de préhension (140) le long du second sens (B) enlevant au moins partiellement la partie amovible (20) de l'emballage (10) à partir de la première partie (15) de l'emballage (10) à une force sensiblement constante.

10. Système (100) selon la revendication 8, le dispositif de préhension (140) étant conçu pour se déplacer le long du second sens (B) sous un angle sensiblement constant par rapport à la base (105) et à une vitesse sensiblement constante.

11. Système (100) selon l'une quelconque des revendications 8 à 10, le déplacement du dispositif de préhension (140) le long du second sens (B) enlevant au moins partiellement la partie amovible (20) de l'emballage (10) à partir de la première partie (15) sous un angle de pelage sensiblement constant.

12. Procédé de réalisation d'une procédure de test d'ouverture par pelage sur un emballage (10) présentant une première partie (15) et une partie amovible (20), le procédé comprenant :
la fixation de la première partie (15) de l'emballage (10) contre un déplacement sur une base (105) à l'aide d'un accessoire (110) conçu pour fixer la première partie (15) ;
l'accouplement de façon mobile d'un support (135) à la base (105) le long d'au moins un premier sens (A) ; et
la fourniture d'un dispositif de préhension (140) de façon mobile le long du support (135) le long d'un second sens (B), le dispositif de préhension (140) étant conçu pour fixer la partie amovible (20) de l'emballage (10), de telle sorte que la première partie (15) de l'emballage (10) est fixée par l'accessoire (110) et la partie amovible (20) de l'emballage (10) est fixée par le dispositif de préhension (140) ;
le déplacement du support (135) le long du premier sens (A) et le déplacement du dispositif de préhension (140) le long du second sens (B) afin d'enlever au moins partiellement la partie amovible (20) de l'emballage (10) à partir de la première partie (15) de l'emballage (10).
